# EUROPÄISCHE PATENTSCHRIFT

(11) **EP 0 867 059 B1**
(45) Veröffentlichungstag und Bekanntmachung des Hinweises auf die Patenterteilung: **26.05.1999**
(21) Anmeldenummer: 96939877.5
(22) Anmeldetag: 21.11.1996
(51) Int. Cl.: H02B 1/40

(54) **VERTEILERSCHALTSCHRANK**
DISTRIBUTION CONTROL CABINET
COFFRET DE DISTRIBUTION

(30) Priorität: 16.12.1995 DE 19547136
(43) Veröffentlichungstag der Anmeldung: 30.09.1998
(73) Patentinhaber: Rittal-Werk Rudolf Loh GmbH & Co. KG, 35745 Herborn (DE)
(72) Erfinder: BESSERER, Horst, D-35745 Herborn (DE); HARTEL, Marc, D-35447 Reiskirchen (DE)
(74) Vertreter: Fleck, Hermann-Josef, Dr.-Ing.
(86) Internationale Anmeldenummer: EP9605135
(87) Internationale Veröffentlichungsnummer: WO9723024

(56) Entgegenhaltungen:
- WO-A-95/10132
- DE-B- 1 095 348
- DE-U- 8 506 772
- FR-A- 2 575 868
- GB-A- 2 113 291
- US-A- 4 675 782
- US-A- 4 805 073

## Beschreibung

Die Erfindung betrifft einen Verteilerschaltschrank aus einem als Bodenwanne mit abgekanteter niedriger Seitenwand ausgebildeten Unterteil und einem mit in die Einbauhöhe festlegenden Seitenwänden versehenen Oberteil, wobei das Oberteil auf einer Schmalseite an dem Unterteil mittels Scharnier angelenkt und auf der gegenüberliegenden Schmalseite mittels im Deckel des Oberteils angebrachten Verschlusses am Unterteil festlegbar oder freigebbar ist und wobei die Seitenwände von Unterteil und Oberteil sich im Bereich der einander zugekehrten, offenen Seiten zumindest teilweise überlappen und einen Verteilerschaltschrank aus einem als Bodenwanne mit einheitlich hohen abgekanteten Seitenwänden ausgebildeten Unterteil und zwei mit ebenfalls gleich hohen Seitenwänden versehenen Oberteilen, wobei die Oberteile an den einander gegenüberliegenden Schmalseiten des Unterteils mittels Scharnier angelenkt sind und die Schließseite der Oberteile in der Mitte der Längsseiten des Unterteils angeordnet ist.

Ein Verteilerschaltschrank der ersten Art ist aus der US-A 4,805,073 bekannt. Bei diesem bekannten Verteilerschaltschrank ist auf der der Anlenkseite vom Oberteil am Unterteil gegenüberliegenden Schmalseite des Unterteils ein drittes Wandteil angebracht, das ein Gegenschließelement für den am Oberteil angebrachten Verschluß trägt. Daher ist diese Schmalseite des Verteilerschaltschrankes selbst bei offenem Oberteil praktisch geschlossen und der Zugang zu den im Unterteil eingebauten Einbauten ist beachtlich erschwert. Darüberhinaus wird das Oberteil mit seinen Seitenwänden in das Unterteil hineingeschwenkt, so daß die Seitenwände des Unterteils am Verteilerschaltschrank nach außen abstehen.

Ein Verteilerschaltschrank der zweiten Art ist aus der DE-B 1 095 348 bekannt. Das Unterteil hat verhältnismäßig hohe Seitenwände, und in der Mitte der Längsseiten ist eine Trennwand angeordnet, die das Unterteil in zwei Aufnahmekammern unterteilt. Das Unterteil wird mittels zweier Oberteile verschlossen, die an den beiden Schmalseiten des Unterteils angelenkt sind. Im Schließbereich liegen die Oberteile mit ihren Seitenwänden auf der Trennwand auf. Verschlußelemente sind in diesem Stand der Technik nicht gezeigt.

Aus der DE-U 85 06 772 ist ein Verteilerschaltschrank aus einem Unterteil bekannt, das mit den freien Kanten seiner Seitenwände eine zur Befestigungsfläche geneigte Ebene einnimmt. Die Kanten laufen in einen Innensteg aus, der einen Außensteg der Seitenwände des einzigen oder von zwei Oberteilen bündig aufnimmt, sobald der Verteilerschrank geschlossen ist. Werden zwei Oberteile von den Schmalseiten aufgeschoben, dann können diese mit ihren offenen Stirnseiten unter einen am Unterteil angebrachten Tragbügel geschoben werden.

Alle diese bekannten Verteilerschaltschränke sind im Zugang zu den auf dem Unterteil aufgebauten Einbauten mehr oder weniger stark beeinträchtigt und erfordern zum Verschluß oft zusätzliche Wandelemente.

Es ist Aufgabe der Erfindung, einen zwei- und dreiteiligen Verteilerschaltschrank mit einfachen und leicht zu montierenden Bauteilen zu schaffen, der einen optimalen Zugang zu den Einbauten auf dem Unterteil bietet.

Diese Aufgabe wird bei einem zweiteiligen Verteilerschaltschrank dadurch gelöst, daß die Seitenwände des Unterteils umlaufend gleich hoch ausgebildet sind und mit einem Außenabsatz einen Innensteg an den Seitenwänden des Unterteils bilden, während die ebenfalls gleich hoch ausgebildeten Seitenwände des Oberteils in der Schließstellung den Innensteg des Unterteils übergreifen, und daß das Unterteil im Bereich der Schließseite einen die Schmalseite übergreifenden Schließbügel trägt, auf dem sich das Oberteil abstützt und mit dem der Verschluß des Oberteils in der Schließstellung zuusammenarbeitet, während für einen dreiteiligen Verteilerschaltschrank vorgesehen ist, daß die Seitenwände des Unterteils umlaufend niedrig ausgebildet sind und mit einem Außenabsatz einen Innensteg des Unterteils bilden, daß die Oberteile in den Schließstellungen den Innensteg des Unterteils übergreifen, daß die Oberteile im Bereich der Schließseite offen sind und sich auf einem am Unterteil angebrachten Schließbügel abstützen und daß in dem Deckel der Oberteile angebrachte Verschlüsse mit dem Schließbügel zusammenarbeiten.

In beiden Fällen sind Unterteil und Oberteil oder Oberteile einfach ausgebildet und außer dem Schließbügel ist kein weiteres Gehäusebauteil erforderlich. Der Schließbügel dient als Auflage für das Oberteil oder die Oberteile und wird gleichzeitig als Gegenschließelement verwendet, das mit dem Verschluß des Oberteils oder den Verschlüssen der Oberteile zusammenarbeitet. Der geschlossene Verteilerschaltschrank bildet im geschlossenen Zustand stets eine abgeschlossene Einheit. Im geöffneten Zustand besteht optimaler Zugang zu den Einbauten auf dem Unterteil.

Die Anbringung des Verteilerschaltschrankes an einer Befestigungsfläche wird nach einer Ausgestaltung dadurch erreicht, daß das Unterteil mit Befestigungsaufnahmen zur Wandbefestigung versehen ist. Diese Art von Verteilerschaltschränken wird in der Regel ja an einer Wand befestigt.

Um Anschlußkabel auf einfache Weise in den Verteilerschaltschrank einführen zu können, sieht eine weitere Ausgestaltung vor, daß die Seitenwände des Unterteils mit Kabeleinführungsöffnungen versehen sind.

Ist vorgesehen, daß die Deckelteile mit unterschiedlichen Verschlüssen versehen sind, dann lassen sich auf einfache Weise unterschiedliche Zugangsberechtigungen für Teilbereiche des Verteilerschaltschrankes schaffen. Dabei kann zudem vorgesehen sein, daß mindestens einer der Verschlüsse mit einer Vorrichtung zum Plombieren versehen ist und daß der Schließbügel als Trennwand ausgebildet ist. Auf diese Weise kann überprüft werden, ob unberechtigt Zugang zu dem besonders gesicherten Teilbereich des Verteilerschaltschrankes verschafft worden ist. Das Trennblech dient dabei zur eindeutigen Abgrenzung der Teilbereiche.

Aus aesthetischen Gründen ist die Ausgestaltung so ausgeführt, daß die zu dem (den) Scharnier(en) parallelen Übergangskanten des Oberteils bzw. der Deckelteile abgeschrägt sind.

Die Erfindung wird anhand von zwei in den Zeichnungen dargestellten Ausführungsbeispielen näher erläutert. Es zeigen:
- Fig. 1 und 2: in zwei Ansichten einen Verteilerschaltschrank aus Unterteil und Oberteil in der Offenstellung,
- Fig. 3 und 4: in zwei Ansichten den Verteilerschaltschrank nach Fig. 1 und 2 in der Schließstellung,
- Fig. 5 und 6: in zwei Ansichten einen Verteilerschaltschrank aus Unterteil und zwei Deckelteilen in der Offenstellung und
- Fig. 7 und 8: in zwei Ansichten den Verteilerschaltschrank nach Fig. 5 und 6 in der Schließstellung.

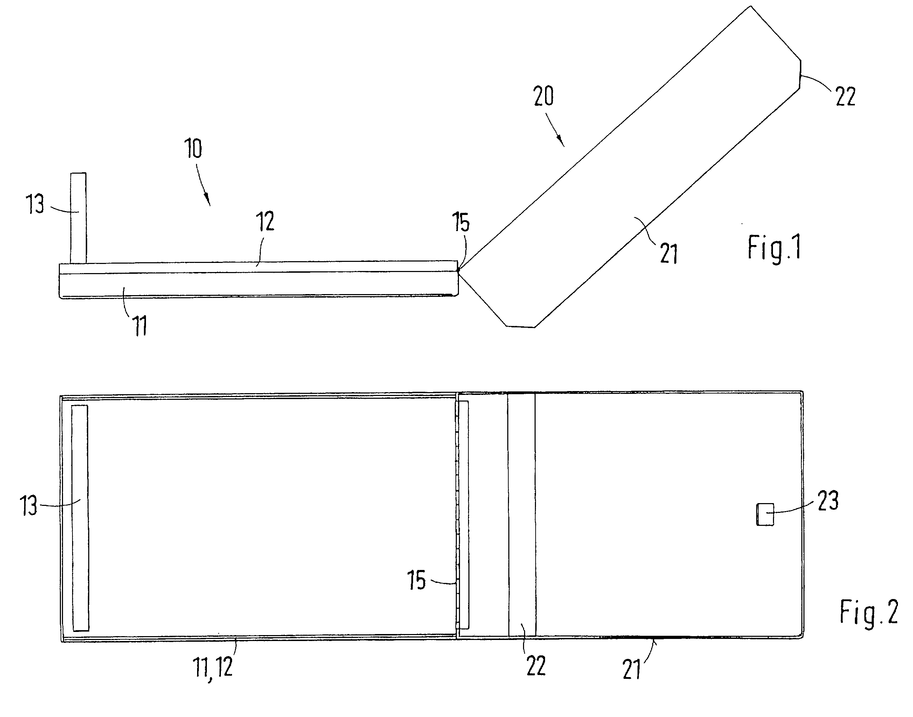

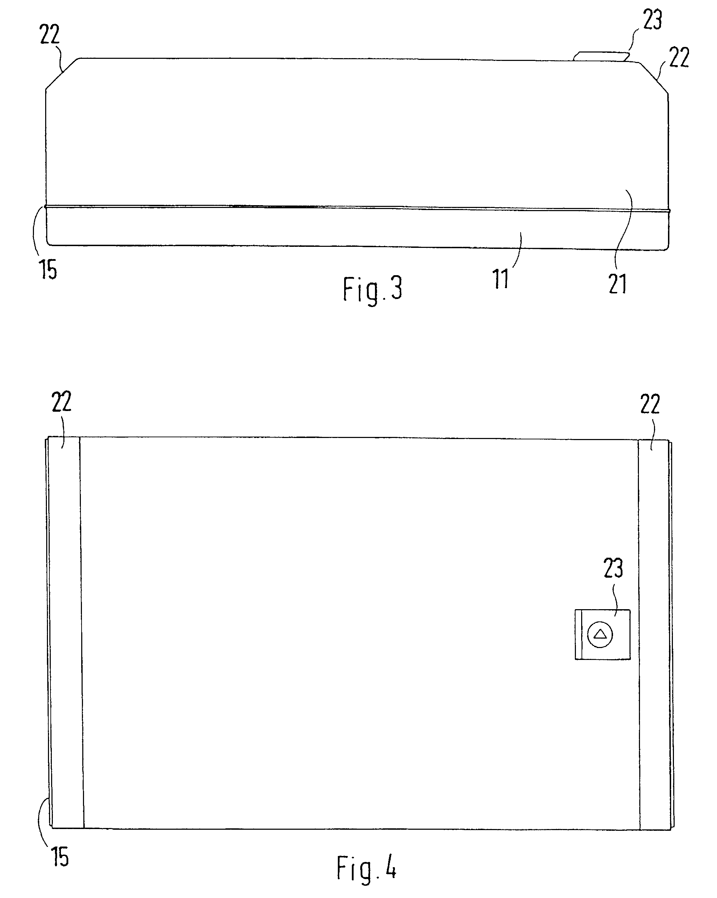

Bei dem Ausführungsbeispiel nach den Fig.1 bis 4 ist das Unterteil 10 als Bodenwanne mit sehr niedrigen, umlaufenden Seitenwänden 11 ausgebildet. An einer Schmalseite der rechteckförmigen Bodenwanne ist über ein Scharnier 15, das auch lösbar ausgebildet sein kann, das wannenartige Oberteil 20 angelenkt. Die Seitenwände 21 des Oberteils 20 bestimmen die Einbauhöhe des Verteilerschrankes. Die Ausgestaltung ist dabei so, daß in der Schließstellung die Seitenwände 21 des Oberteils 20 den umlaufenden Außenabsatz 12 der Seitenwände 11 des Unterteils 10 übergreifen und abdecken, wie die Fig. 3 und 4 zeigen. Damit ist der Verteilerschaltschrank eindeutig dicht verschließbar. Auf der dem Scharnier 15 gegenüberliegenden Seite der Bodenwanne ist ein Schließbügel 13 angebracht, auf dem sich das Oberteil 20 in der Schließstellung abstützt und mit dem der im Oberteil 20 eingesetzte Verschluß 23 zusammenarbeitet. Die zum Scharnier 15 parallelen Übergangskanten zwischen den Seitenwänden 21 und der Deckwand des Oberteils 20 sind aus aesthetischen Gründen abgeschrägt.

Wie die Fig. 1 und 2 zeigen, sind die in der Bodenwanne des Unterteils 10 eingesetzten Einbauten bei geöffnetem Oberteil 20 zumindest von drei Seiten frei zugänglich und können ohne Behinderung montiert und verdrahtet werden. Wird ein lösbares Scharnier 15 verwendet, dann kann das Oberteil 20 vom Unterteil 10 gelöst werden. Dann ist der freie Zugang auch von der Scharnierseite aus zu den Einheiten für die Montage und Verdrahtung möglich.

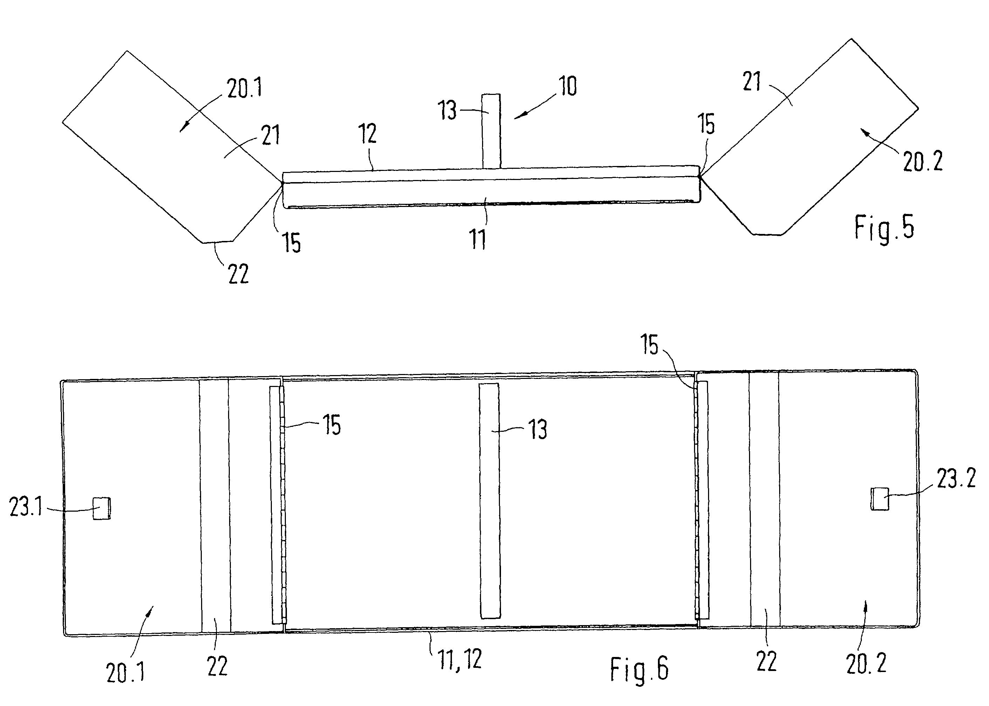

Bei dem Ausführungsbeispiel nach den Fig. 4 bis 8 ist an dem wieder als Bodenwanne ausgebildeten Unterteil 10 an beiden Schmalseiten über ein Scharnier 15 jeweils ein Deckelteil 20.1 bzw. 20.2 angelenkt. Die Deckelteile 20.1 und 20.2 bestimmen mit ihren Seitenwänden 21 die Einbauhöhe des Verteilerschaltschrankes. Die den Scharnieren 15 abgekehrten Seiten der Deckelteile 20.1 und 20.2 sind offen und stützen sich in der Schließstellung auf dem Schließbügel 13 ab, der in der Mitte der Bodenwanne angebracht ist. Die Seitenwände 11 des Unterteils 10 laufen wieder in den umlaufenden Außenabsatz 12 aus und die parallel zu den Scharnieren 15 stehenden Außenkanten der Deckelteile 20.1 und 20.2 sind abgeschrägt, wie mit dem Bezugszeichen 22 angedeutet ist.

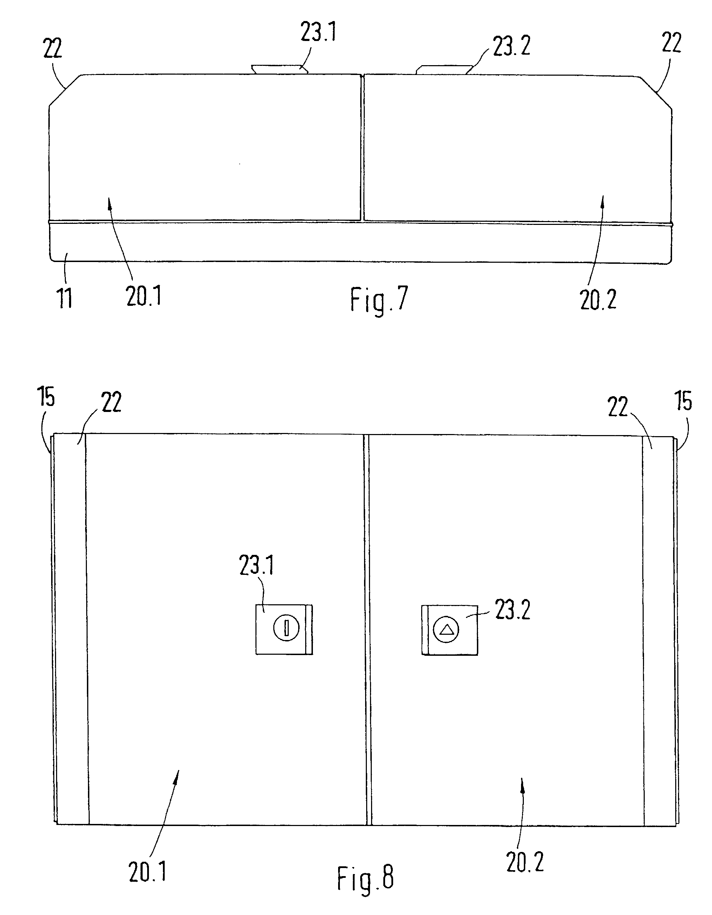

In die Deckelteile 20.1 und 20.2 sind Verschlüsse 23.1 und 23.2 eingebaut, die mit dem Schließbügel 13 zusammenarbeiten. Wie die Fig. 7 und 8 erkennen lassen, werden unterschiedliche Verschlüsse 23.1 und 23.2 verwendet, wenn unterschiedliche Zugangsberechtigungen für die den Deckelteilen 20.1 und 20.2 zugeordneten Teilbereiche des Verteilerschaltschrankes gewünscht werden. Dabei kann der Schließbügel 13 als Trennwand zwischen den Teilbereichen ausgebildet werden, um eine vollständige Abteilung des Innenraumes des Verteilerschaltschrankes zu erreichen. Es lassen sich dabei im Verteilerschaltschrank zwei Kammern bilden, die unterschiedliche Zugangsberechtigung erhalten können. Ist einer der Verhältnisse, z.B. 23.1, plombierbar, dann kann ein unberechtigter Zugang nachträglich festgestellt werden. Dabei kann in einfacher Weise die Schlüsselaufnahme des Verschlusses von dem Plombendrahtes in den Verschluß einführbar.

## Patentansprüche

1. Verteilerschaltschrank aus einem als Bodenwanne mit abgekanteter niedriger Seitenwand (11) ausgebildeten Unterteil (10) und einem mit in die Einbauhöhe festlegenden Seitenwänden (21) versehenen Oberteil (20), wobei das Oberteil (20) auf einer Schmalseite an dem Unterteil (10) mittels Scharnier angelenkt und auf der gegenüberliegenden Schmalseite mittels im Deckel des Oberteils (20) angebrachten Verschlusses (13) am Unterteil (10) festlegbar oder freigebbar ist und wobei die Seitenwände (11,21) von Unterteil (12) und Oberteil (20) sich im Bereich der einander zugekehrten, offenen Seiten zumindest teilweise überlappen,
dadurch gekennzeichnet,
daß die Seitenwände (11) des Unterteils (10) umlaufend gleich hoch ausgebildet sind und mit einem Außenabsatz (12) einen Innensteg an den Seitenwänden (11) des Unterteils (10) bilden, während die ebenfalls gleich hoch ausgebildeten Seitenwände (21) des Oberteils (20) in der Schließstellung den Innensteg des Unterteils (10) übergreifen, und
daß das Unterteil (10) im Bereich der Schließseite einen die Schmalseite übergreifenden Schließbügel (13) trägt, auf dem sich das Oberteil (20) abstützt und mit dem der Verschluß (23) des Oberteils (20) in der Schließstellung zuusammenarbeitet.

2. Verteilerschaltschrank aus einem als Bodenwanne mit einheitlich hohen abgekanteten Seitenwänden (11) ausgebildeten Unterteil (10) und zwei mit ebenfalls gleich hohen Seitenwänden (21) versehenen Oberteilen (20.1, 20.2), wobei die Oberteile (20.1, 20.2) an den einander gegenüberliegenden Schmalseiten des Unterteils (10) mittels Scharnier angelenkt sind und die Schließseite der Oberteile (20.1, 20.2) in der Mitte der Längsseiten des Unterteils (10) angeordnet ist,
dadurch gekennzeichnet,
daß die Seitenwände (11) des Unterteils (10) umlaufend niedrig ausgebildet sind und mit einem Außenabsatz (12) einen Innensteg des Unterteils (10) bilden,
daß die Oberteile (20.1, 20.2) in den Schließstellungen den Innensteg des Unterteils (10) übergreifen,
daß die Oberteile (20.1, 20.2) im Bereich der Schließseite offen sind und sich auf einem am Unterteil (10) angebrachten Schließbügel (13) abstützen und
daß in dem Deckel der Oberteile (20.1, 20.2) angebrachte Verschlüsse (23.1, 23.2) mit dem Schließbügel (13) zusammenarbeiten.

3. Verteilerschaltschrank nach Anspruch 1 oder 2,
dadurch gekennzeichnet,
daß das Unterteil (10) mit Befestigungsaufnahmen zur Wandbefestigung versehen ist.

4. Verteilerschaltschrank nach einem der Ansprüche 1 bis 3,
dadurch gekennzeichnet,
daß die Seitenwände (11) des Unterteils (10) mit Kabeleinführungsöffnungen versehen sind.

5. Verteilerschaltschrank nach einem der Ansprüche 2 bis 4,
dadurch gekennzeichnet,
daß die Deckelteile (20.1, 20.2) mit unterschiedlichen Verschlüssen (23.1,23.2) versehen sind.

6. Verteilerschaltschrank nach Anspruch 5,
dadurch gekennzeichnet,
daß mindestens einer der Verschlüsse (z.B. 23.1) mit einer Vorrichtung zum Plombieren versehen ist.

7. Verteilerschaltschrank nach Anspruch 2,
dadurch gekennzeichnet,
daß der Schließbügel (23) als Trennwand ausgebildet ist.

8. Verteilerschaltschrank nach einem der Ansprüche 1 bis 7,
dadurch gekennzeichnet,
daß die zu dem (den) Scharnier(en) (15) parallelen Übergangskanten (22) des Oberteils (20) bzw. der Oberteile (20.1, 20.2) abgeschrägt sind.

9. Verteilerschaltschrank nach einem der Ansprüche 1 bis 8,
dadurch gekennzeichnet,
daß die Scharniere (15) lösbar ausgebildet sind.

## Claims

1. Distributor switchgear cabinet, comprising a lower part (10), which is configured as a trough-shaped base having an angled, low lateral wall (11), and an upper part (20) provided with lateral walls (21), which determine the installation height, the upper part (20) being pivotally mounted on a narrow side of the lower part (10) by means of hinges and being securable or releasable on the oppositely situated narrow side of the lower part (10) by means of a closure (23) mounted in the cover of the upper part (20), and the lateral walls (11, 21) of the lower part (10) and upper part (20) overlapping, at least partially, in the region of the open sides facing each other, characterised in that the lateral walls (11) of the lower part (10) have an identical peripheral height and form, with an external shoulder portion (12), an internal web on the lateral walls (11) of the lower part (10), while the lateral walls (21) of the upper part (20), which also have an identical height, overlap the internal web of the lower part (10) in the closed position, and in that, in the region of the closed side, the lower part (10) is provided with a locking clamp (13) overlapping the narrow side, the upper part (20) being supported on said clamp, and the closure (23) of the upper part (20) co-operating with said clamp in the closed position.

2. Distributor switchgear cabinet, comprising a lower part (10), which is configured as a trough-shaped base having uniformly high, angled lateral walls (11), and two upper parts (20.1, 20.2) provided with lateral walls (21), which also have an identical height, the upper parts (20.1, 20.2) being pivotally mounted on the narrow sides of the lower part (10), which lie opposite each other, by means of hinges, and the closing side of the upper parts (20.1, 20.2) being disposed in the centre of the longitudinal sides of the lower part (10), characterised in that the lateral walls (11) of the lower part (10) have a low configuration circumferentially and form, with an external shoulder portion (12), an internal web of the lower part (10), in that the upper parts (20.1, 20.2) overlap the internal web of the lower part (10) in the closed positions, in that the upper parts (20.1, 20.2) are open in the region of the closing side and are supported on a locking clamp (13) mounted on the lower part (10), and in that closures (23.1, 23.2), mounted in the cover of the upper parts (20.1, 20.2), co-operate with the locking clamp (13).

3. Distributor switchgear cabinet according to claim 1 or 2, characterised in that the lower part (10) is provided with securing receivers for securing the walls.

4. Distributor switchgear cabinet according to one of claims 1 to 3, characterised in that the lateral walls (11) of the lower part (10) are provided with apertures for the insertion of cables.

5. Distributor switchgear cabinet according to one of claims 2 to 4, characterised in that the upper parts (20.1, 20.2) are provided with variable closures (23.1, 23.2).

6. Distributor switchgear cabinet according to claim 5, characterised in that at least one of the closures (e.g. 23.1) is provided with a device for sealing purposes.

7. Distributor switchgear cabinet according to claim 2, characterised in that the locking clamp (13) is configured as a dividing wall.

8. Distributor switchgear cabinet according to one of claims 1 to 7, characterised in that the transitional edges (22) of the upper part (20), or respectively of the upper parts (20.1, 20.2), which edges lie parallel to the hinge(s) (15), are chamfered.

9. Distributor switchgear cabinet according to one of claims 1 to 8, characterised in that the hinges (15) are configured to be detachable.

## Revendications

1. Coffret de distribution comportant une partie inférieure (10) en forme de cuvette avec une paroi latérale cintrée de hauteur relativement faible (11) et une partie supérieure (20) dotée de parois latérales (21), lesquelles déterminent la hauteur d'encastrement, où la partie supérieure (20) est au moyen d'une charnière articulée sur le côté étroit de la partie inférieure (10), et peut, du côté étroit opposé à celui de la charnière, au moyen d'une fermeture fixée dans le couvercle de la partie supérieure (20), être solidarisée avec la partie inférieure (10) ou en être désolidarisée et où les parois latérales (11, 21) de la partie inférieure (12) et de la partie supérieure (20) se chevauchent au moins partiellement dans la zone des côtés ouverts qui se font face,
caractérisé
en ce que les parois latérales (11) de la partie inférieure (10) ont la même hauteur sur tout le pourtour et présentent, du côté extérieur, une feuillure (12) laissant, du côté intérieur, une nervure sur les parois latérales (11) de la partie inférieure (10), tandis que les parois latérales (21) de la partie supérieure (20), ces parois étant également d'une hauteur uniforme sur tout le pourtour, chevauchent, en position de fermeture, la nervure intérieure de la partie inférieure (10), et en ce que la partie inférieure (10) porte, dans la zone située du côté de la fermeture, un étrier de fermeture (13) passant par-dessus le côté étroit, étrier sur lequel s'appuie la partie supérieure (20) et qui coopère, en position de fermeture, avec la fermeture (23) de la partie supérieure (20).

2. Coffret de distribution comportant une partie inférieure (10) en forme de cuvette, avec des parois latérales cintrées (11) ayant partout la même hauteur, ce coffret comportant aussi deux parties supérieures (20.1, 20.2) dotées de parois latérales (21), toutes de la même hauteur, où les parties supérieures (20.1, 20.2) s'articulent au moyen de charnières sur les côtés étroits de faisant face de la partie inférieure (10) qui se font face et où la fermeture des parties supérieures (20.1, 20.2) se fait sur la médiatrice des côtés longitudinaux de la partie inférieure (10),
caractérisé
en ce que les parois latérales (11) de la partie inférieure (10) ont sur tout leur pourtour une même hauteur relativement faible et présentent vers l'extérieur une feuillure (12), formant du côté intérieur, une nervure sur la partie inférieure (10),
en ce que les parties supérieures (20.1, 20.2) recouvrent, en position de fermeture, la nervure de la partie inférieure (10),
en ce que les parties supérieures (20.1, 20.2) sont ouvertes du côté fermeture et s'appuient sur un étrier de fermeture (13) fixé à la partie inférieure (10) et en ce que des fermetures (23.1, 23.2) placées dans les couvercles des parties supérieures (20.1, 20.2) collaborent avec l'étrier de fermeture (13).

3. Coffret de distribution suivant l'une ou l'autre des revendications 1 et 2,
caractérisé en ce que la partie inférieure (10) est pourvue de logements de fixation pour la fixation au mur.

4. Coffret de distribution suivant l'une quelconque des revendications de 1 à 3,
caractérisé
en ce que les parois latérales (11) de la partie inférieure (10) présentent des ouvertures pour l'introduction de câbles.

5. Coffret de distribution suivant l'une quelconque des revendications de 2 à 4,
caractérisé
en ce que les parties de couvercle (20.1, 20.2) sont dotées de fermetures (23.1, 23.2) différentes.

6. Coffret de distribution suivant la revendication 5,
caractérisé
en ce qu'au moins l'une des fermetures (par ex. 23.1) est dotée d'un dispositif pour scellés.

7. Coffret de distribution suivant la revendication 2,
caractérisé
en ce que l'étrier de fermeture (23) est conçu en forme de cloison de séparation

8. Coffret de distribution suivant l'une quelconque des revendications de 1 à 7,
caractérisé
en ce que les arêtes d'intersection (22) parallèles à la (ou aux) charnière(s) (15) de la partie supérieure (20), ou des parties supérieures (20.1, 20.2), sont chanfreinées.

9. Coffret de distribution suivant l'une quelconque des revendications de 1 à 8,
caractérisé
en ce que les charnières (15) sont amovibles.
